# EUROPÄISCHE PATENTSCHRIFT

(11) **EP 1 052 135 B1**
(45) Veröffentlichungstag und Bekanntmachung des Hinweises auf die Patenterteilung: **17.09.2003**
(21) Anmeldenummer: 00107749.4
(22) Anmeldetag: 11.04.2000
(51) Int. Cl.: B60K 41/20

(54) **Verfahren zum Herstellen einer vorgegebenen Wirkbeziehung zwischen der Betätigung des Fahrpedals und dem daraus resultierenden Bremsmoment eines Fahrzeugs**
Method for obtaining a predetermined relationship between the acceleration pedal movement and the brake torque resulting therefrom on a vehicle
Procédé pour réaliser une relation prédéterminée entre le mouvement d' une pédale d' accélérateur et la force de freinage résultant de celui-ci dans un véhicule

(30) Priorität: 14.05.1999 DE 19922338
(43) Veröffentlichungstag der Anmeldung: 15.11.2000
(73) Patentinhaber: Bayerische Motoren Werke Aktiengesellschaft, 80809 München (DE)
(72) Erfinder: Unterforsthuber, Jakob, 82216 Maisach (DE)

(56) Entgegenhaltungen:
- EP-A- 0 280 818
- EP-A- 0 819 591
- US-A- 4 146 108
- US-A- 4 262 783
- US-A- 4 615 409
- US-A- 4 787 205
- US-A- 4 871 215

## Beschreibung

Die Erfindung bezieht sich auf ein Verfahren zum Herstellen einer vorgegebenen Wirkbeziehung zwischen der Betätigung des Fahrpedals und dem daraus resuttierenden Bremsmoment eines Fahrzeugs.

Aus der US 4,615,409 oder der DE 3347070 A1 ist ein fahrpedalgesteuertes Fahrgeschwindigkeitsregelsystem bekannt. Hierbei wird in einem unteren Fahrpedalweg-Bereich (0-15%) eine Verzögerung vorgenommen. An der oberen Grenze des unteren Fahrpedalweg-Bereichs ist eine Raststelle (15%-Markierung) vorgesehen, bei deren Erreichen ein Konstanthalten der Geschwindigkeit vorgenommen wird. Diese Raststelle entspricht einem punktförmigen Regelbereich und ist an einem stufenförmigen Anstieg des Kraftverlaufs für den Fahrer dentlich erkennbar. Oberhalb dieser Raststelle wird in einen oberen Fahrpedalweg-Bereich (15-100%)eine Beschlenrigung vorgenommen.

Bei heutigen Fahrzeugen wird üblicherweise die Antriebskraft eines Fahrzeugs mittels des Fahrpedals geregelt. Bei kontinuierlicher Betätigung des Fahrpedals ausgehend von der Nullage wird das Antriebsmoment des Motors (in Form einer Brennkraftmaschine) entsprechend kontinuierlich erhöht, indem das für den Antrieb verantwortliche Stellelement, z. B. die Drosselklappe bei Ottomotoren, angesteuert wird. In der Fahrpedal-Nullage selbst wird kein Antriebsmoment übertragen, d.h. der Motor geht in den Schubbetrieb über, wodurch sich ein sog. Motorschleppmoment ergibt.

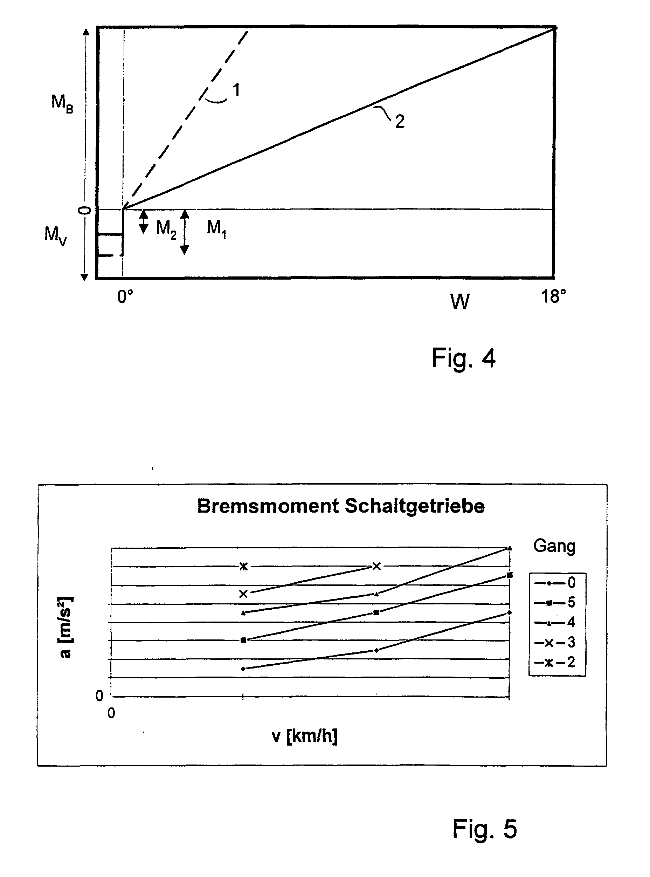

In Fig. 4 ist eine mögliche Fahrpedalcharakteristik nach heutigem Serienstand dargestellt. Hierzu zeigt Fig. 4 eine Antriebsmomentenkennlinie 1, die sich bei einem kleinen eingelegten Gang ergibt, und eine Antriebsmomentenkennlinie 2, die sich bei einem hohem eingelegten Gang ergibt, abhängig vom Fahrpedalwinkel W (Abszisse). Der Fahrpedalwinkel W kann beispielsweise einen Verstellbereich von 0° bis 18° aufweisen. Auf der Ordinate in Fig. 4 ist das Antriebsmoment aufgetragen, wobei unterhalb der Null-Linie das verzögernde Moment Mᵥ (Bremsmoment, negatives Antriebsmoment) und oberhalb der Null-Linie das beschleunigende Moment M_{B} (positives Antriebsmoment) dargestellt sind. In der Nullage des Fahrpedals, d. h. W ≤ 0°, ergeben sich automatisch und abrupt, insbesondere abhängig vom eingelegten Gang und vom Motorschleppmoment, unterschiedliche Bremsmomente: M_{V}=M₁ für die Antriebsmomentenkennlinie 1 und M_{V}=M₂ für die Antriebsmomentenkenntinie 2; d.h. das Bremsmoment M₁ im kleinen Gang ist erheblich größer als das Bremsmoment M₂ im hohen Gang.

Bei dieser Art der Antriebsregelung hat der Fahrer über das Fahrpedal keinen Einfluß auf die in der Nullage auftretende Verzögerung. Sie ergibt sich automatisch aus dem momentan vorliegenden Schleppmoment des Motors (z. B. Ottomotor oder Dieselmotor). Das Schleppmoment wiederum ist ebenfalls abhängig von einer Vielzahl von Faktoren, wie z. B. von der Motordrehzahl, der Fahrzeuggeschwindigkeit, dem eingelegten Gang, dem Hubraum und/oder dem Getriebetyp (z. B. Handschaltoder Automatikgetriebe).

In Fig. 5 sind schematisch die sich ergebenden Antriebsmomente (bzw. Bremsmomente) in Form von Beschleunigungen a (bzw. Verzögerungen) abhängig vom jeweils eingelegten Gang und von der momentanen Fahrzeuggeschwindigkeit v bei einem Fahrzeug mit einem Schaltgetriebe nach dem Stand der Technik dargestellt.

Insbesondere ein Fahren in der Kolonne ist um so einfacher, je höher die Fahrzeugverzögerung beim Loslassen des Fahrpedals ist. Diese Verzögerung setzt sich aus der Eigenverzögerung (Luftwiderstand, Rollwiderstand) und der aus dem Motorschleppmoment resultierenden Verzögerung zusammen.

Die Verwendung niedriger Gangstufen und hoher Drehzahlen gestaltet zwar das Fahren in der Kolonne einfach und komfortabel, sie stellt jedoch das Gegenteil einer verbrauchsgünstigen Fahrweise dar und ist darüber hinaus mit Geräuschemission und Motorverschleiß verbunden. Ein auf Verbrauch bedachter Fahrer wird möglichst einen hohen Gang benutzen. Besonders beim Fahren in der Kolonne ist ein hoher Gang und damit ein niedriges Schleppmoment nachteilig, da zur Anpassung der eigenen Fahrzeuggeschwindigkeit an die Fahrzeuggeschwindigkeit des vorausfahrenden Fahrzeugs häufig gebremst werden muß, wodurch Komforteinbußen die Folge sind. Oftmals läßt der Fahrer, um ein Bremsen zu vermeiden, das eigene Fahrzeug näher an das vorausfahrende Fahrzeug heranrollen, als es der Sicherheitsabstand erlauben würde.

Es ist Aufgabe der Erfindung, eine Fahrpedalcharakteristik eingangs genannter Art derart zu verbessern, daß die genannten Nachteile vermieden werden. Insbesondere soll der Komfort, die Sicherheit und der Kraftstoffverbrauch verbessert werden.

Unter dem vereinfachenden Begriff Fahrpedalcharakteristik wird ein Verfahren verstanden, durch das eine vorgegebene Wirkbeziehung zwischen der Betätigung des Fahrpedals und dem daraus resultierenden Antriebs- bzw. Bremsmoment des Fahrzeugs hergestellt wird.

Erfindungsgemäß wird bei einem Verfahren zum Herstellen einer vorgegebenen Wirkbeziehung zwischen der Betätigung des Fahrpedals und dem daraus resultierenden Bremsmoment eines Fahrzeugs der mögliche Verstellbereich des Fahrpedals in drei Regelbereiche unterteilt. Im ersten Regelbereich unterhalb eines ersten vorgegebenen Fahrpedalwinkels werden Stellglieder, die eine Verzögerung des Fahrzeuges bewirken können, entsprechend einem vorgegebenen Bremsmomentenverlauf geregelt.

Grundsätzlich wird in einem zweiten Regelbereich oberhalb eines zweiten Fahrpedalwinkels, der gleich dem ersten Fahrpedalwinkel oder größer als der erste Fahrpedalwinkel sein kann, das Motormoment und/oder das Antriebsmoment in gewohnter Weise geregelt. Dieser zweite Regelbereich selbst ist jedoch nicht Gegenstand der Erfindung.

In der Erfindung werden in einem dritten Regelbereich zwischen dem ersten und dem zweiten vorgegebenen Fahrpedalwinkel die Stellglieder, die eine Verzögerung oder eine Beschleunigung bewirken können, in der Weise geregelt, daß das Bremsmoment bzw. das Antriebsmoment des Fahrzeuges auf dem Wert konstant gehalten wird, der bei Erreichen eines Fahrpedalwinkels im dritten Regelbereich vorliegt. Die Erfindung geht hierbei davon aus, daß dem Fahrer ein Bereich zugestanden wird, bei dem er weder einen Antrieb noch eine Verzögerung wünscht und der nicht so klein definiert wird, daß ein Pendeln zwischen Antrieb und Verzögerung auftreten kann.

Ideal ist die Erfindung in Kombination mit Stellgliedern von Systemen, die das Schleppmoment des Motors gezielt beinflussen können. Im ersten Regelbereich bei Erreichen des ersten vorgegebenen Fahrpedalwinkels von oben wird z. B. das Schleppmoment soweit wie möglich herabgesetzt, um die kinetische Energie des Fahrzeugs so lange wie möglich auszunutzen. Bei der Fahrpedalbewegung in Richtung Verzögerung, d.h. bei einer weiteren Abnahme des Fahrpedalwinkels unterhalb des ersten vorgegebenen Fahrpedalwinkels wird kontinuierlich das Schleppmoment erhöht. Stellglieder, die eine derartige Schleppmomentenregelung ermöglichen, sind z. B. elektrisch ansteuerbare Ventile von EVT-Systemen (EVT= elektrisch variabler Ventiltrieb), bei denen die Ventile willkürlich geschlossen werden können, oder Stellglieder eines Kurbelwellen-Starter-Generators (KSG).

Weitere Stellglieder, die eine Verzögerung des Fahrzeuges bewirken können, sind im Zusammenhang mit der erfindungsgemäßen Fahrpedalcharakteristik z. B. Komponenten von Radbremsregelsystemen für aktive Bremseingriffe unabhängig von der Betätigung des Bremspedals oder Komponenten von elektronisch gesteuerten Automatikgetrieben für ein automatisches Zurückschalten der Gänge.

Mit der vorliegenden Erfindung werden eine Vielzahl von Vorteilen erreicht. So ergibt sich beispielsweise bei Automatikfahrzeugen ein erheblicher Komfortgewinn dadurch, daß bei Kolonnenfahrt nicht ständig zwischen Fahr- und Bremspedal gewechselt werden muß. Sicherheit wird durch ermüdungsfreies Einhalten des Sicherheitsabstandes gewonnen. Bei Handschaltgetriebefahrzeugen wird dennoch eine kraftstoffsparende Fahrweise durch niedrige Drehzahlen und hohe Gänge ermöglicht. In Verbindung mit Energierückgewinnungssystemen (z.B. Kurbelwellen-Starter-Generator (KSG)) kann erheblich Treibstoff gespart werden. In Verbindung mit Motorstop, automatischen Kupplungen, Freiläufen und CVT-Getrieben wird eine komfortable, nicht gewöhnungbedürftige und unproblematische Fahrweise ermöglicht.

In der Zeichnung sind Ausführungsbeispiele der Erfindung dargestellt. Es zeigen
- Fig. 1: eine nicht erfindunsgemäße Fahrpedalkennlinie, die in zwei Regelbereiche eingeteilt ist,
- Fig. 2: eine nicht erfindungsgemäße Fahrpedalcharakteristik und
- Fig. 3: eine erfindungsgemäße Fahrpedalcharakteristik

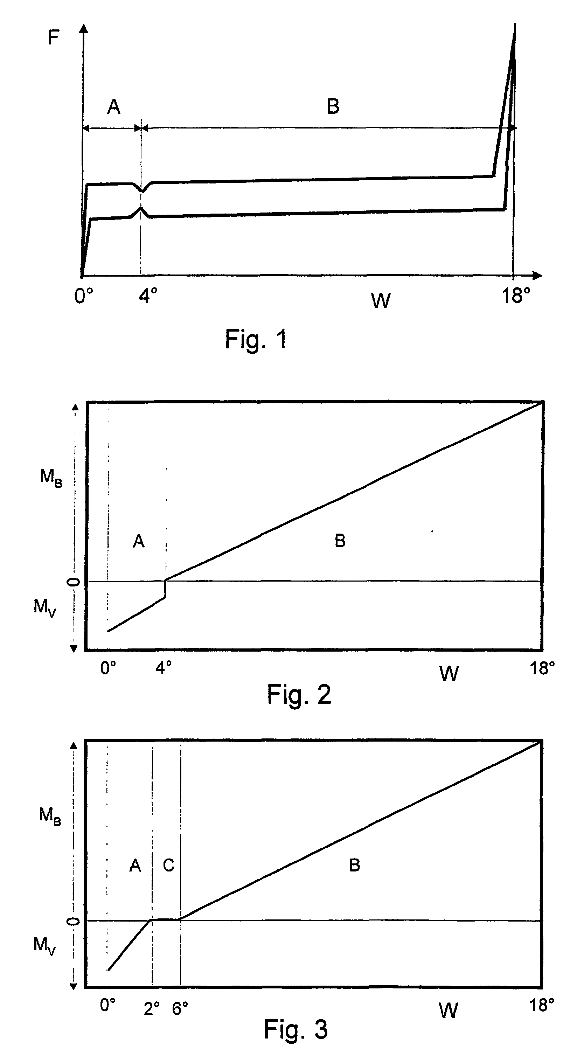

In Fig. 1 ist eine Fahrpedalkennlinie als Fahrpedalkraft F in Abhängigkeit vom Fahrpedalwinkel W mit Hysterese bezogen auf den Verlauf des Verzögerungsvorganges (obere Linie) im Unterschied zum Verlauf des Beschleunigungsvorganges (untere Linie) dargestellt. Die Fahrpedalkennlinie ist im Hinblick auf den gesamten Fahrpedalwinkelbereich von beispielsweise 0° bis 18° in zwei Regelbereiche A und B aufgeteilt. Der erste Regelbereich A liegt in diesem Beispiel (vgl. auch Fig. 2) unterhalb eines vorgegebenen Fahrpedalwinkels W von 4°. Der zweite Regelbereich B liegt oberhalb desselben vorgegebenen Fahrpedalwinkels. In der erfindungsgemäßen Alternative (vgl. auch Fig. 3) liegt der erste Regelbereich A unterhalb eines ersten Fahrpedalwinkels W, z. B. 2°, und der zweite Regelbereich B oberhalb eines zweiten Fahrpedalwinkels W, z. B. 6°. Damit entsteht ein dritter Regelbereich C zwischen dem ersten und dem zweiten Fahrpedalwinkel W entstehen. Das Erreichen des ersten und/oder zweiten Fahrpedalwinkels W kann dem Fahrer vorzugsweise haptisch mitgeteilt werden.

Mögliche Erzeugung der Fahrpedalkennlinie: Im Zuge der Weiterentwicklung der Fahrpedalsysteme könnte auf mechanischer Basis eine entsprechende Kennlinie fest installiert werden. Günstigere Voraussetzungen bietet das aktive Fahrpedal, bei dem eine feste Grundkennlinie über einen Stellmotor am Pedal mit Zusatzkräften überlagert werden kann. Ein Maximum an Flexibilität bietet das sog. Force-Feedback-Fahrpedal, bei dem Kennlinien und Hysteresen frei gestaltet und ereignisorientiert angepaßt werden können.

In den Figuren 2 und 3 sind abhängig von den zwei bzw. drei definierten Regelbereichen A, B und ggf. C mögliche, in Figure 3 erfindungsgemäße Fahrpedalcharakteristika in Form von Antriebsmomenten bzw. Bremsmomenten in Abhängigkeit vom Fahrpedalwinkel W dargestellt.

In beiden Figuren 2 und 3 wird im zweiten Regelbereich B (Antriebsbereich) das Antriebsmoment wie gewohnt geregelt. Im ersten Regelbereich A (Bremsbereich) wird eine vorgegebene Verzögerung bzw. ein vorgegebener Bremsmomentenverlauf aufgebaut. Die Höhe der regelbaren Verzögerung sollte vorzugsweise die bei hohen Drehzahlen auftretende Eigenverzögerung nicht überschreiten.

In Fig. 3 ist der dritte Regelbereich C dargestellt. In diesem Regelbereich C wird das Antriebsmoment auf dem Wert konstant gehalten, der bei Erreichen des dritten Regelbereichs ausgehend vom Regelbereich A oder ausgehend vom Regelbereich B bezogen auf den Fahrpedalwinkel W gerade vorliegt.

In hier nicht dargestellten weiteren Ausgestaltungen der Erfindung kann der vorgegebene Bremsmomentenverlauf im Regelbereich A jede beliebige in Richtung des zunehmenden Fahrpedalwinkels W steigende Form aufweisen und auch bei Fehlen eines Regelbereichs C im Unterschied zu Fig. 2 kontinuierlich in den Antriebsmomentenverlauf des Regelbereichs B übergehen.

Zum Erreichen der vorgegebenen Verzögerung bzw. des vorgegebenen (negativen) Antriebsmomentenverlaufs (Bremsmomentenverlaufs) im Regelbereich A (Fig. 2 und Fig. 3) wird in einem vorzugsweise ohnehin vorhandenen elektronischen Steuergerät (z. B. Motorsteuergerät) die Istverzögerung mit der dem jeweiligen Fahrpedalwinkel W zugeordneten Sollverzögerung verglichen. Bei Bedarf werden bestimmte Maßnahmen ergriffen, um die Regelabweichung auszugleichen. Derartige Maßnahmen sind z. B. ein Bremseneingriff über ein elektronisches Radbremsregelsystem, das Zurückschalten bei Fahrzeugen mit Automatikgetriebe, eine Erhöhung des Schleppmoments bei Motoren mit variablem Ventiltrieb (EVT) oder eine Erzeugung des Schleppmoments mittels eines Kurbelwellenstartergenerators (KSG).

Beispielsweise bei Fahrzeugen mit einer automatischen Kupplung wird zur Erzeugung des notwendigen Bremsmoments dosiert eingekuppelt. Der Schlupf kann so geregelt werden, daß das Istbremsmoment dem Sollbremsmoment entspricht. Falls das Bremsmoment mittels der automatischen Kupplung nicht ausreicht, wird die Differenz z. B. durch einen Bremseingriff vom Radbremsregelsystem ausgeglichen.

Hervorragende Voraussetzungen bietet der Einsatz eines CVT-Getriebes, da sich damit das Bremsmoment durch Änderung der Übersetzung sehr leicht regeln läßt. Allein dadurch ergibt sich bereits eine erhebliche Verbrauchseinsparung, die durch Verwendung einer automatischen Kupplung oder z. B. auch eines schaltbaren Freilaufs noch steigerungsfähig ist.

Bei Fahrzeugen mit Kurbelwellen-Starter-Generatoren (KSG) ist das KSG-Antriebsmoment dem Motormoment überlagert. Das Bremsmoment wird bei nicht ausreichender Bremswirkung des KSG durch das Motorbremsmoment oder mit Hilfe der Radbremsen zum gewünschten Gesamtbremsmoment ergänzt.

Eine ideale Grundlage zur Realisierung der Erfindung ist eine voll variable Ventilsteuerung. Im Schubbetrieb kann damit das Motorschleppmoment in erheblichem Maße beeinflußt werden. Geschlossene Ventile bedeuten ein sehr kleines Schleppmoment. Ein kurz vor dem oberen Totpunkt (OT) der Zylinder öffnendes Auslaßventil bewirkt ein hohes Schleppmoment. Vor allem die Absenkung des Schleppmoments deutlich unter das heutige Niveau eröffnet die Chance, auch ohne Freilauf und ohne automatische Kupplung signifikante Verbrauchseinsparungen zu erzielen.

Die Eigenverzögerung bei heutigen Fahrzeugen schwankt in der Regel zwischen 0,2 m/s² (freirollendes Fahrzeug) und 1 m/s² bei hohen Motordrehzahlen. Als Grenzwert für eine vom Fahrer über das Fahrpedal dosiert aufzubringende Eigenverzögerung könnten z. B. 1 m/s² angesetzt werden. Damit würde man sich innerhalb des heute üblichen Bereichs bewegen. Es sind aber auch noch deutlich höhere Werte bis ca. 2 m/s² möglich.

Erfindungsgemäß wird also dem Fahrer die Möglichkeit gegeben, die Fahrzeugverzögerung mittels des Fahrpedals zu beeinflussen. Bei der heutigen Fahrpedalauslegung besteht nur die Möglichkeit, entweder über den Motor anzutreiben oder mit dem Motor in Schubabschaltung zu gehen. Der Übergang vom einen in den anderen Betriebszustand erfolgt abrupt und ist nicht dosierbar. Durch die Dreiteilung der Fahrpedalcharakteristik wird dem Fahrer die Möglichkeit gegeben, nicht nur das Antriebsmoment, sondern auch die Verzögerung bis hin zu einer bestimmten Schwelle zu regeln.

## Patentansprüche

1. Verfahren zum Herstellen einer vorgegebenen Wirkbeziehung zwischen der Betätigung des Fahrpedals und dem daraus resultierenden Bremsmoment eines Fahrzeugs, wobei der mögliche Verstellbereich (0° bis 18°) des Fahrpedals in drei Regelbereiche (A, B, C) unterteilt wird, wobei ein erster Regelbereich (A) unterhalb eines ersten vorgegebenen Fahrpedalwinkels (W=2°) definiert wird, wobei im ersten Regelbereich (A) Stellglieder, die eine Verzögerung des Fahrzeuges bewirken können, entsprechend einem vorgegebenen Bremsmomentenverlauf (Mᵥ) geregelt werden,
wobei der zweite Regelbereich (B) oberhalb eines zweiten vorgegebenen Fahrpedalwinkels (W=6°) definiert wird, wobei wischen dem ersten (W=2°) und dem zweiten (W=6°) vorgegebenen Fahrpedalwinkel (W) ein dritter Regelbereich (C) definiert wird, in dem die Stellglieder, die eine Verzögerung oder eine Beschleunigung bewirken können, in der Weise geregelt werden, daß das Bremsmoment (Mᵥ) bzw. das Antriebsmoment (M_{B}) des Fahrzeuges konstant gehalten wird, wobei der zweite vorgegebene Fahrpedalwinkel (W = 6°) größer als der erste vorgegebene Fahrpedalwinkel (W = 2°) ist und wobei der dritte Regelbereich (C) so groß ist, dass ein Pendeln Zwischen Antrieb und Verzögerung nicht auftreten Kann.

## Claims

1. Method for producing a predetermined active relationship between the actuation of the accelerator pedal and the braking torque resulting therefrom of a vehicle, wherein the possible adjusting range (0° to 18°) of the accelerator pedal is divided into three control ranges (A, B, C), wherein a first control range (A) is defined below a first predetermined accelerator pedal angle (W = 2°), wherein, in the first control range (A), control elements which can bring about a deceleration of the vehicle, are controlled according to a predetermined braking torque course (Mᵥ), wherein the second control range (B) is defined above a second predetermined accelerator pedal angle (W = 6°), wherein between the first (W = 2°) and the second (W = 6°) predetermined accelerator pedal angle (W), a third control range (C) is defined, in which the control elements which can bring about a deceleration or an acceleration are controlled in such a way that the braking torque (Mᵥ) or the drive torque (M_{B}) of the vehicle is kept constant, wherein the second predetermined accelerator pedal angle (W = 6°) is greater than the first predetermined accelerator pedal angle (W = 2°) and wherein the third control range (C) is so great that an oscillation between drive and deceleration cannot occur.

## Revendications

1. Procédé pour réaliser une relation prédéterminée entre le mouvement de la pédale d'accélérateur et la force de freinage résultant de celui-ci dans un véhicule, selon lequel on divise la plage de réglage possible (0° à 18°) de la pédale d'accélérateur en trois plages de régulation (A, B, C), on définit une première plage de régulation (A) en dessous d'un premier angle prédéterminé (W = 2°) de la pédale d'accélérateur, dans laquelle on régule dans la première plage de régulation (A) des organes de réglage qui peuvent provoquer un ralentissement du véhicule, en fonction d'une courbe prédéterminée du couple de freinage (Mᵥ), on définit la deuxième plage de régulation (B) au-dessus d'un deuxième angle prédéterminé (W = 6°) de la pédale d'accélérateur, on définit une troisième plage de réglage (C) entre les premier (W = 2°) et deuxième (W = 6°) angles prédéterminés de la pédale d'accélérateur (W), dans laquelle on régule les organes de réglage qui peuvent provoquer un ralentissement ou une accélération, de façon telle que le couple de freinage (Mᵥ), respectivement le couple moteur (M_{B}) du véhicule soit maintenu constant, le deuxième angle prédéterminé (W = 6°) de la pédale d'accélérateur étant plus grand que le premier angle prédéterminé (W = 2°) de la pédale d'accélérateur, et la troisième plage de régulation (C) étant tellement grande qu'il ne peut pas se produire d'oscillation entre un entraînement et un ralentissement.
